# EUROPEAN PATENT APPLICATION

(11) **EP 4 664 600 A1**
(43) Date of publication of application: **17.12.2025**
(21) Application number: 23921266.5
(22) Date of filing: 11.10.2023
(51) Int. Cl.: H01M 10/44, B64D 27/24, H02J 7/00

(54) **BATTERY SYSTEM, SECONDARY BATTERY, AND ELECTRIC AERIAL VEHICLE**

(30) Priority: 10.02.2023 JP 2023019462
(71) Applicant: DENSO CORPORATION, Kariya-city, Aichi 448-8661 (JP)
(72) Inventor: SHIMONISHI, Yuta, Kariya-city, Aichi 448-8661 (JP); YOSHIDA, Shuhei, Kariya-city, Aichi 448-8661 (JP)
(74) Representative: TBK
(86) International application number: PCT/JP2023/036870
(87) International publication number: WO 2024/166441

(57) **Abstract**

A battery system is mounted on an electric vehicle. The battery system includes a secondary battery (2) and a battery control unit. The battery control unit controls the secondary battery (2) to perform a high-rate discharge when the electric vehicle is started. A positive electrode (4) of the secondary battery (2) has a first active material (41) and a second active material (42). The second active material (42) has a high resistance region in which a resistance is higher than that of the first active material (41) in a high-rate discharge region which is the SOC region of the secondary battery (2) where high-rate discharge is performed at startup time. The secondary battery (2) is configured so that, when high-rate discharge is performed at startup time, after the utilization rate of the second active material (42) becomes higher than the utilization rate of the first active material (41), the utilization rate of the first active material (41) becomes higher than the utilization rate of the second active material (42).

## Description

### CROSS REFERENCE TO RELATED APPLICATION

This application is based on Japanese Patent Application No. 2023-019462 filed on February 10, 2023, the contents of which are incorporated herein by reference.

### TECHNICAL FIELD

The present disclosure relates to a battery system, a secondary battery, and an electric aerial vehicle.

### BACKGROUND ART

Patent Document 1 discloses an electric aerial vehicle equipped with plural secondary batteries. This electric aerial vehicle is configured to perform an emergency evacuation operation if an abnormality occurs in the secondary battery. In addition, if an abnormality occurs in one secondary battery of this electric aerial vehicle, the other secondary battery will compensate to ensure the output necessary for flight, so as to restrict issues affecting the safety.

### PRIOR ART LITERATURE

### PATENT LITERATURE

Patent Document 1: JP 2020-196440 A

### SUMMARY OF INVENTION

Generally, an electric aerial vehicle requires a relatively high output when taking off at a start-up time. When the electric aerial vehicle takes off, the discharge rate of the secondary battery becomes high, which tends to cause a bias in the ion concentration distribution in the secondary battery. Therefore, there may be temporary deterioration, which is a temporary increase in the internal resistance of the secondary battery, being caused by the imbalance in the concentration distribution of the ions. Even if the electric aerial vehicle described in Patent Document 1 is equipped with multiple secondary batteries, a temporary deterioration may occur in all of the secondary batteries. It can be said that there is room for further improvement from the perspective of ensuring output at the time of starting up the electric aerial vehicle.

The present disclosure seeks to provide a battery system, a secondary battery, and an electric aerial vehicle to improve the output at start-up of an electric vehicle.

According to a first aspect of the present disclosure, a battery system for an electric vehicle includes:
a secondary battery; and
a battery control unit configured to control a discharge of the secondary battery.

The battery control unit controls the secondary battery to perform high-rate discharge, which is a discharge at a higher rate than a discharge rate of the secondary battery during normal operation of the electric vehicle, at the start timing of the electric vehicle.

A positive electrode of the secondary battery includes a first active material and a second active material. In a high-rate discharge region which is an SOC region of the secondary battery in which the high-rate discharge is performed at the start timing, the second active material has a high resistance region having a higher resistance than the first active material.

The secondary battery is configured such that the utilization rate of the first active material becomes higher than the utilization rate of the second active material, after the utilization rate of the second active material becomes higher than the utilization rate of the first active material, when the high-rate discharge is performed at the start timing.

According to a second aspect of the present disclosure, a secondary battery to be mounted on an electric aerial vehicle has a positive electrode and a negative electrode.

The positive electrode has a first active material and a second active material. When the secondary battery has a predetermined SOC value, the second active material has a higher resistance than the first active material.

The first active material is a lithium nickel cobalt manganese oxide having a layered rock salt structure, and the second active material is a lithium iron manganese phosphate having an olivine structure.

According to a third aspect of the present disclosure, an electric aerial vehicle includes the battery system of the first aspect.

According to a fourth aspect of the present disclosure, an electric aerial vehicle includes the secondary battery of the second aspect.

In the battery system of the first aspect, the secondary battery is configured such that the utilization rate of the second active material becomes higher than the utilization rate of the first active material and then the utilization rate of the first active material becomes higher than the utilization rate of the second active material, when performing the high-rate discharge at the start timing. Therefore, at the time of starting, the temperature of the secondary battery is increased, so that the secondary battery can be discharged at a high rate in a state where the internal resistance of the secondary battery is reduced. In other words, by suppressing temporary deterioration of the secondary battery, high output of the secondary battery can be ensured. As a result, the output can be improved at the start timing of the electric vehicle.

The secondary battery of the second aspect has the first active material and the second active material. When the SOC value of the secondary battery is a predetermined value, the second active material has a higher resistance than the first active material. The first active material is a lithium nickel cobalt manganese oxide having a layered rock salt structure, and the second active material is a lithium manganese iron phosphate having an olivine structure. Therefore, by suppressing temporary deterioration of the secondary battery at the time of starting, high output of the secondary battery can be ensured. As a result, the output at the start timing of the electric vehicle can be improved.

The electric aerial vehicle of the third aspect is equipped with the battery system of the first aspect. Therefore, by suppressing temporary deterioration of the secondary battery at the time of starting, high output of the secondary battery can be ensured. As a result, the output at the start timing of the electric aerial vehicle can be improved.

The electric aerial vehicle of the fourth aspect includes the secondary battery of the second aspect. Therefore, by suppressing temporary deterioration of the secondary battery at the time of starting, high output of the secondary battery can be ensured. As a result, the output at the start timing of the electric aerial vehicle can be improved.

As described above, according to the above aspects, it is possible to provide a battery system, a secondary battery, and an electric aerial vehicle to improve the output at the start timing of an electric vehicle. The reference numerals in parentheses described in the claims indicate the correspondence relationship with the specific means described in the embodiments described later, and do not limit the technical scope of the present disclosure.

### BRIEF DESCRIPTION OF DRAWINGS

The above and other objects, features and advantages of the present disclosure will become more apparent from the following detailed description made with reference to the accompanying drawings. In the drawings:
FIG. 1 is an external view of an electric aerial vehicle equipped with a battery system according to a first embodiment;
FIG. 2 is a cross-sectional view of a secondary battery according to the first embodiment;
FIG. 3 is a graph showing a relationship between an SOC and a voltage of the secondary battery in the first embodiment;
FIG. 4 is a graph showing a relationship between an SOC and a voltage of a secondary battery in Comparative Example 1;
FIG. 5 is a graph showing a relationship between the SOC and a voltage of a secondary battery in Comparative Example 2;
FIG. 6 is a flowchart showing a process from a charging of a secondary battery to a discharging during normal operation in the first embodiment;
FIG. 7 is a graph showing a magnitude of output during takeoff, normal operation, and landing in the first embodiment;
FIG. 8 is a graph showing a relationship between a discharge rate, a temperature of a secondary battery, and an internal resistance of the secondary battery in the first embodiment and Comparative Example 1; and
FIG. 9 is a scanning electron microscope diagram of a cross-section of a secondary battery in Working Example 1.

### DESCRIPTION OF EMBODIMENTS

### (First embodiment)

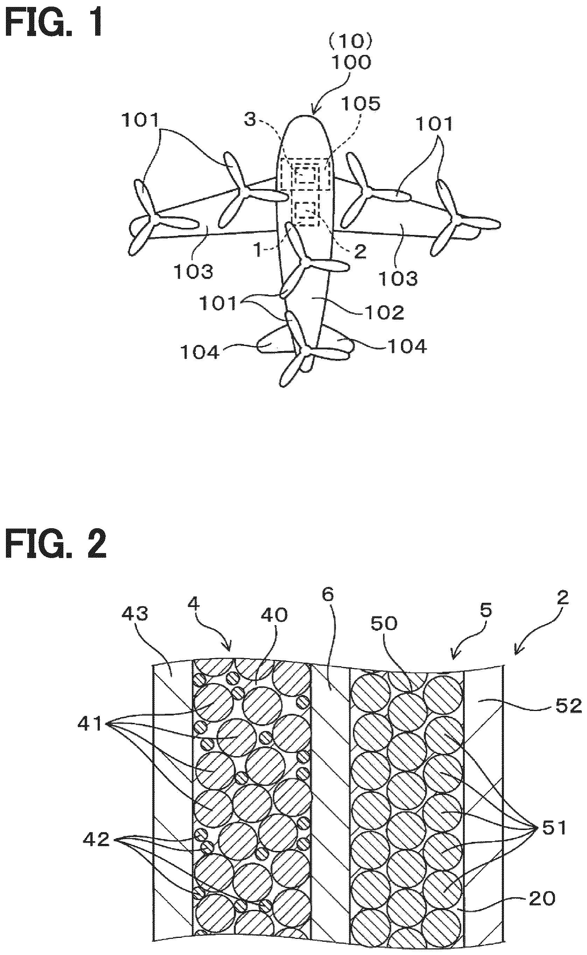

A battery system, a secondary battery, and an electric aerial vehicle will be described with reference to FIGS. 1 to 8.

The battery system 1 of this embodiment is mounted on an electric vehicle 10 as shown in FIG. 1. The battery system 1 includes a secondary battery 2 and a battery control unit 3 that controls discharging of the secondary battery 2. The battery control unit 3 controls the secondary battery 2 to perform high-rate discharge when the electric vehicle 10 starts. The high-rate discharge is a discharge at a rate higher than the discharge rate of the secondary battery 2 during normal operation of the electric vehicle 10.

As shown in FIG. 2, the positive electrode 4 of the secondary battery 2 has a first active material 41 and a second active material 42. The second active material 42 has a high resistance region where the resistance is higher than that of the first active material 41 in a high-rate discharge region, which is a State Of Charge (SOC) region of the secondary battery 2 in which high-rate discharge is performed at the startup time.

The secondary battery 2 is configured so that, when starting up and performing high-rate discharge, after the utilization rate of the second active material 42 becomes higher than the utilization rate of the first active material 41, the utilization rate of the first active material 41 becomes higher than the utilization rate of the second active material 42. In this embodiment, the high-rate discharge region represents a region from an initial SOC value which is the SOC value of the secondary battery 2 when the high-rate discharge begins at the startup time, to an SOC value that is 20 percentage points lower than the initial SOC value. For example, if the initial SOC value is 90%, the high-rate discharge region is defined by an SOC region in which the SOC value is in the range of 70 to 90%. The high-rate discharge can be continued, for example, in an SOC region where the SOC value is in the range of 70 to 90%.

The battery system 1 of this embodiment can be used as means for controlling discharge when the electric vehicle 10 moves, for example, by being mounted on the electric vehicle 10. The electric vehicle 10 may be an electric aerial vehicle 100 such as an electronic vertical take-off and landing aircraft (eVTOL), an electronic short distance take-off and landing aircraft (eSTOL), or a drone. In this embodiment, the electric vehicle 10 is an electric vertical take-off and landing aircraft of the electric aerial vehicle 100.

As shown in FIG. 1, the electric aerial vehicle 100 includes the battery system 1. In other words, the electric aerial vehicle 100 is equipped with the secondary battery 2. The secondary battery 2 stores electricity for driving a motor (not shown) and the like mounted on the electric aerial vehicle 100. In this embodiment, the secondary battery 2 is a lithium ion battery.

As shown in FIG. 2. the secondary battery 2 mounted on the electric aerial vehicle 100 has a positive electrode 4 and a negative electrode 5. The positive electrode 4 has a current collector 43, and the negative electrode 5 has a current collector 52. A load or power generator is electrically connected to the current collector 43, 52, such that the secondary battery 2 can be discharged or charged. The current collector 43, 52 may be made of a conductor such as a metal foil or a metal plate.

The secondary battery 2 has a separator 6. The separator 6 is disposed between the positive electrode 4 and the negative electrode 5 to separate the positive electrode 4 from the negative electrode 5. The separator 6 has lithium ion permeability. In this embodiment, the separator 6 is in a sheet form and has a porous structure. The separator is made of, for example, polyolefin such as polyethylene or polypropylene.

The secondary battery 2 includes an electrolyte 20. In this embodiment, the electrolyte 20 is impregnated into the positive electrode 4, the negative electrode 5, and the separator 6. The electrolyte 20 may include, for example, a non-aqueous solvent and a lithium salt. The non-aqueous solvent can be, for example, dimethyl carbonate, ethyl methyl carbonate, ethylene carbonate, and the like, and can also be a mixture thereof. The lithium salt may be, for example, LiPF₆, LiBF₄, LiClO₄, or a mixture thereof. The electrolyte 20 may contain an additive such as vinylene carbonate.

As the electrolyte 20 of the secondary battery 2, a solid electrolyte can be used. The solid electrolyte may be, for example, a polymer-based solid electrolyte such as polyethylene oxide, a sulfide-based solid electrolyte, or an oxide-based solid electrolyte. As the sulfide-based solid electrolyte, for example, a solid electrolyte having an argyrodite structure such as Li₆PS₅Cl, or a solid electrolyte having a LGPS structure such as Li₁₀GeP₂S₁₂ can be used. The oxide-based solid electrolyte may include a solid electrolyte having a pyrochlore structure such as Li_{1.25}La_{0.58}Nb₂O₆F, a solid electrolyte having a garnet structure, such as Li₇La₃Zr₂O₁₂, a solid electrolyte having a NASICON structure, such as Li_{1.4}Al_{0.4}Ti_{1.6}(PO₄)₃, and a solid electrolyte having a perovskite structure, such as La_{0.57}Li_{0.29}TiO₃. The electrolyte 20 may be, for example, a mixture of two or more of the solid electrolytes listed above. The solid electrolyte may be contained in the positive electrode 4 and the negative electrode 5.

The positive electrode 4 has an active material layer 40 that contains an active material and is provided on the surface of the current collector 43. The negative electrode 5 has an active material layer 50 that contains an active material and is provided on the surface of the current collector 52. The active material layer 40, 50 may contain, in addition to the active material, for example, a conductive material, a binder, and the like.

As the active material 51 contained in the active material layer 50 of the negative electrode 5, for example, graphite, silicon, lithium metal, or LTO (lithium titanate) based active materials can be adopted.

The active material layer 40 of the positive electrode 4 has a first active material 41 and a second active material 42. In this embodiment, the first active material 41 is lithium nickel cobalt manganese oxide having a layered rock salt structure. The second active material 42 is lithium manganese iron phosphate having an olivine structure. The lithium nickel cobalt manganese oxide, which is the first active material 41, has a higher energy density than the lithium iron manganese phosphate, which is the second active material 42. The active material layer 40 of the positive electrode 4 may contain, for example, an active material other than the first active material 41 and the second active material 42.

In this embodiment, the resistance of the first active material 41 decreases as the SOC of the secondary battery 2 increases. The lithium nickel cobalt manganese oxide that is the first active material 41 can be represented by the following Formula 1. In this embodiment, the lithium nickel cobalt manganese oxide of the first active material 41 can be represented by the following Formula 2. In Formula 1, x+y+z=1, 0.6≤x<1, 0.02≤y≤0.2, and 0.02≤z≤0.2.

Formula 1: LiNiₓCo_{y}Mn_{z}O₂

Formula 2: LiNi_{0.8}Co_{0.1}Mn_{0.1}O₂

The second active material 42 has a higher resistance than the first active material 41 when the SOC value of the secondary battery 2 is a predetermined value. That is, as described above, the second active material 42 has a high resistance region in which the resistance is higher than that of the first active material 41 in the high-rate discharge region. The lithium manganese iron phosphate that is the second active material 42 can be represented by the following Formula 3. In this embodiment, the lithium manganese iron phosphate of the second active material 42 can be expressed by the following Formula 4. In Formula 3, x>0.5.

Formula 3: LiMnₓFe₁₋ₓPO₄

Formula 4: LiNi_{0.6}Fe_{0.4}PO₄

The ratio of the first active material 41 to the total active material of the positive electrode 4 is 50 to 95 wt%, and the ratio of the second active material 42 to the total active material of the positive electrode 4 is 5 to 50 wt%. When the initial SOC value is set to a relatively high value of around 90%, the ratio of the second active material 42 to the total active material of the positive electrode 4 is preferably 5 to 20 wt%, and the ratio of the first active material 41 to the total active material of the positive electrode 4 is preferably 80 to 95 wt%. The ratio of the first active material 41 to the entire active material of the positive electrode 4 is more preferably 90 wt% or more, and the ratio of the second active material 42 to the entire active material of the positive electrode 4 is more preferably 10 wt% or less. Further, the ratio of the second active material 42 to the total active material of the positive electrode 4 is more preferably 9 wt% or less. When the initial SOC value is set to a relatively low value of around 60%, the ratio of the second active material 42 to the total active material of the positive electrode 4 is preferably 40 to 50 wt%, and the ratio of the first active material 41 to the total active material of the positive electrode 4 is preferably 50 to 60 wt%.

In this embodiment, an average diameter of particles of the first active material 41 is larger than an average diameter of particles of the second active material 42. In other words, the average diameter of particle of the second active material 42 is smaller than the average diameter of particle of the first active material 41. However, in either case where the average diameter of particle of the first active material 41 is larger than the average diameter of particle of the second active material 42, or where the average diameter of particle of the first active material 41 is smaller than the average diameter of particle of the second active material 42, the output can be improved at the time of starting the electric vehicle 10. The first active material 41 may have an average diameter of particle, for example, 5 to 15 µm, and the second active material 42 may have an average diameter of particle, for example, 0.1 to 20.0 µm.

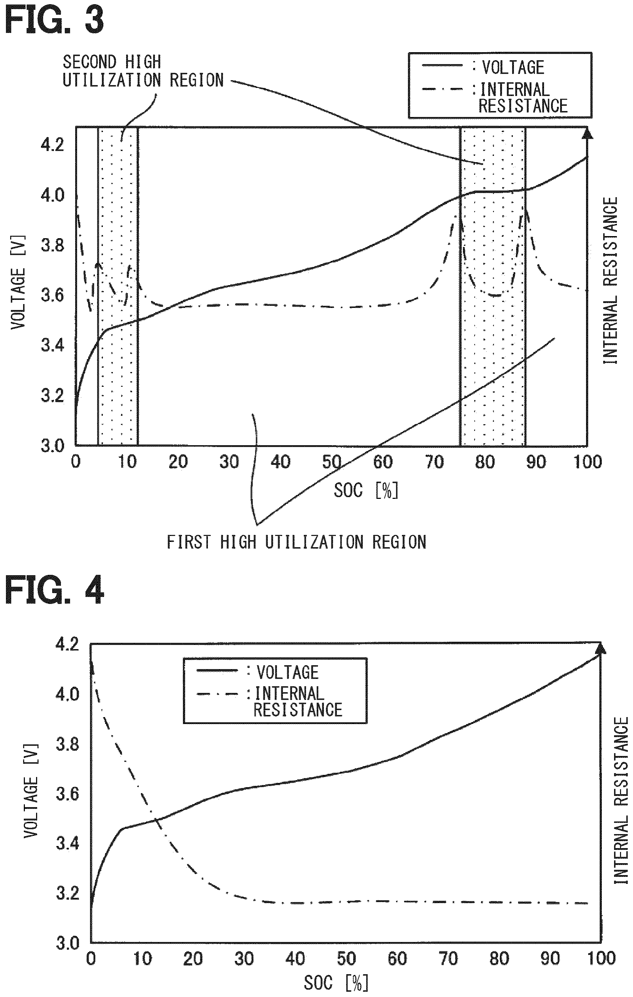

Next, the characteristics of the secondary battery 2 of this embodiment will be described. As shown in FIG. 3, the voltage of the secondary battery 2 of this embodiment changes with the change in the SOC value. Specifically, as the SOC value of the secondary battery 2 becomes smaller, the voltage of the secondary battery 2, which is the potential difference between the positive electrode 4 and the negative electrode 5, becomes smaller. As will be described later, the utilization rate of the first active material 41 and the utilization rate of the second active material 42 vary depending on the voltage of the secondary battery 2. In this embodiment, the utilization rate of the first active material 41 means the ratio of lithium ions absorbed in the first active material 41 to the total lithium ions absorbed in the active material of the positive electrode 4 during discharge. The utilization rate of the second active material 42 means the ratio of lithium ions absorbed in the second active material 42 to the total lithium ions absorbed in the active material of the positive electrode 4 during discharge.

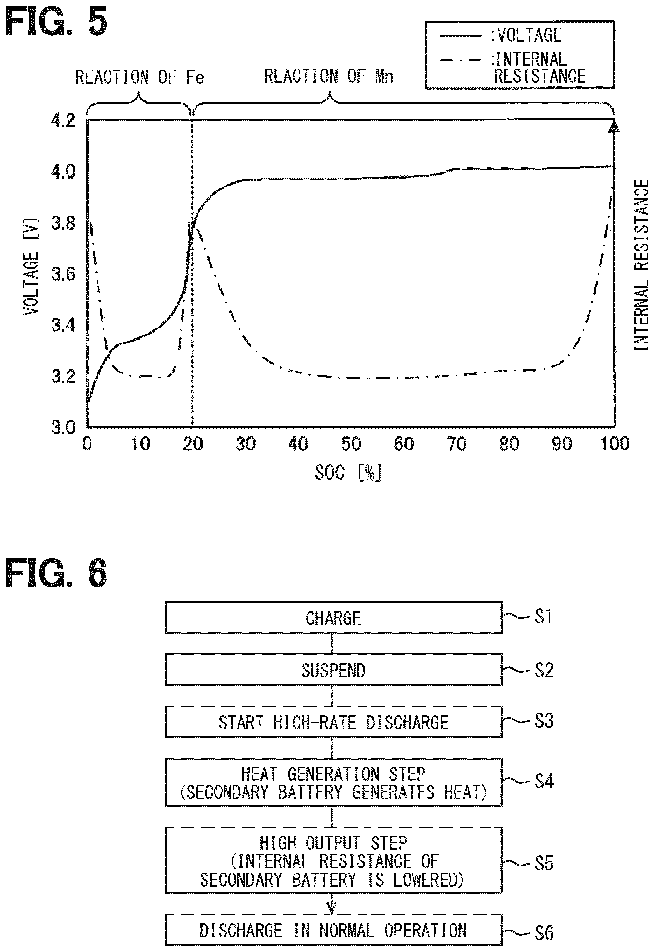

In this embodiment, the reaction during charging and discharging at around 3.4 V is mainly related to Fe (i.e., iron) of the second active material 42 which is lithium manganese iron phosphate. Moreover, the reaction during charging and discharging at around 4.0 V is mainly related to Mn (i.e., manganese) of the second active material 42 which is lithium manganese iron phosphate. Therefore, as shown in FIG. 5, in case of a secondary battery of Comparative Example 2 having only lithium manganese iron phosphate as the positive electrode active material, the voltage curve is flat near 3.4 V and near 4.0 V. In this case, charging and discharging are mainly performed in the potential range near 3.4 V and near 4.0 V. In this embodiment, the second active material 42 mainly undergoes a reaction during charging and discharging in the potential range of about 3.4 V and about 4.0 V. Therefore, in this embodiment, as shown in FIG. 3, when the voltage of the secondary battery 2 is around 3.4 V and around 4.0 V, there is a second high utilization region in which the utilization rate of the second active material 42 is higher than the utilization rate of the first active material 41. Moreover, the second high utilization region is defined where the SOC value of the secondary battery 2 is around 10% and around 80 to 90%. In the second high utilization region, the second active material 42 is mainly involved in the reaction during charging and discharging. That is, the secondary battery 2 is configured to have the second high utilization region within a low SOC region where the SOC value of the secondary battery 2 is lower than a predetermined value. The low SOC region may be, for example, a region where the SOC value is 30% or less. An SOC of 0% means that the secondary battery 2 is in a completely discharged state, and an SOC of 100% means that the secondary battery 2 is in a fully charged state.

In this embodiment, as shown in FIG. 3, a region other than the two of the second high utilization regions is a first high utilization region where the utilization rate of the first active material 41 is higher than the utilization rate of the second active material 42. In the first high utilization region, the first active material 41 is mainly utilized for reactions during charging and discharging. As shown in FIG. 4, in case of a secondary battery of Comparative Example 1 in which only the same lithium nickel cobalt manganese oxide as the first active material is used as the positive electrode active material, the voltage curve shows a decrease in the voltage as the SOC value decreases.

The first active material 41 and the second active material 42 have different resistances. The internal resistance of the secondary battery 2 and the resistance of the active material change depending on the state of charge of the secondary battery 2, that is, the value of SOC. In this embodiment, the second active material 42 has a lower resistance than the first active material 41 in the low SOC region. Moreover, the first active material 41 has a higher resistance in the low SOC region than in other SOC regions. Therefore, as shown in FIG. 4, also in Comparative Example 1, the internal resistance is higher in the low SOC region than in other SOC regions.

In this embodiment, the second active material 42 has a high resistance region having a higher resistance than the first active material 41 in a high-rate discharge region where the SOC value is in the range of 70 to 90%. The magnitude of the resistance of the first active material 41 and the second active material 42 can be measured, for example, by DCIR (Direct Current Internal Resistance) measurement, which measures the DC resistance at each value of the SOC of the secondary battery 2, or by AC impedance measurement, which measures the AC resistance at each value of the SOC of the secondary battery 2. Whether the internal resistance of the secondary battery 2 measured by these measurement methods is due to the first active material 41 or the second active material 42 can be determined based on a secondary battery that uses only the same active material as either one of the first active material or the second active material as the active material of the positive electrode. Specifically, the magnitude of the resistance of the first active material 41 and the second active material 42 can be obtained by referring to the SOC-OCV (Open Circuit Voltage) curve or the SOC-CCV (Closed Circuit Voltage) curve of a secondary battery using only the same active material as the first active material as the positive electrode active material, and a secondary battery using only the same active material as the second active material as the positive electrode active material, and the internal resistance at each SOC. For example, the magnitude of the resistance of the second active material 42 in the secondary battery 2 of this embodiment can be determined by referring to the graph of Comparative Example 2 in FIG. 5, which has a flat voltage curve near 4.0 V, and the graph of Comparative Example 1 in FIG. 4, which does not have a flat voltage curve near 4.0 V. In other words, as shown in the graph of FIG. 3, it can be determined that the internal resistance of the secondary battery 2 in the second high utilization region where the SOC value is around 80% and the voltage is around 4.0 V is mainly due to the resistance of the second active material 42 by referring to the graph of Comparative Example 1 in FIG. 4 and the graph of Comparative Example 2 in FIG. 5.

Next, the electric aerial vehicle 100 of this embodiment will be described. As shown in FIG. 1, the electric aerial vehicle 100 of this embodiment has a main body 102, fixed wings, and rotors 101. The main body 102 is provided with, for example, a storage space for storing luggage to be transported. In this embodiment, the electric aerial vehicle has a main wing 103 and a tail wing 104 as the fixed wings for generating lift. The electric aerial vehicle 100 may be, for example, a manned or unmanned aircraft.

The electric aerial vehicle 100 includes the plural rotors 101 and the plural motors (not shown) that respectively rotate the rotors 101. The motor is driven by power from the secondary battery 2. In this embodiment, the rotor 101 is provided on both the main body 102 and the main wing 103. By rotating the rotor 101 with the motor, lift and thrust are generated, allowing the electric aerial vehicle 100 to fly.

The electric aerial vehicle 100 is configured to move in the vertical direction and in the horizontal direction. The electric aerial vehicle 100 is configured to move in a direction that includes a vertical component and a horizontal component, that is, to be able to move in a direction inclined relative to the horizontal direction.

The electric aerial vehicle 100 of this embodiment is equipped with the plural secondary batteries 2. The secondary batteries 2 can be connected in series or in parallel to each other. In this embodiment, the electric aerial vehicle 100 is equipped with a battery module that is modularized by connecting the secondary batteries 2 in series and in parallel with each other.

The electric aerial vehicle 100 of this embodiment has an aerial vehicle control unit 105 that controls the flight of the electric aerial vehicle 100. The aerial vehicle control unit 105 includes, for example, a processor, memory, communication circuitry for wireless communication, etc. The processor can control operations such as takeoff and landing and normal operation of the electric aerial vehicle 100, for example, by executing a control program pre-stored in the memory. In addition, takeoff, landing, and normal operation of the electric aerial vehicle 100 can be performed, for example, based on information about a preset flight path, and can also be performed based on commands from outside the electric aerial vehicle 100.

In the battery system 1 mounted on the electric aerial vehicle 100, the battery control unit 3 includes a processor and a memory. The processor of the battery control unit 3 can control the discharge of the secondary battery 2 by, for example, executing a control program pre-stored in the memory. In this embodiment, the battery system 1 is a part of the aerial vehicle control unit 105.

Next, a process from charging the electric aerial vehicle 100 to performing normal operation will be described with reference to the flowchart of FIG. 6. First, in step S1, the secondary battery 2 mounted on the electric aerial vehicle 100 is charged in order to ensure a sufficient cruising distance for the electric aerial vehicle 100. In this embodiment, the secondary battery 2 is charged using an external charging facility (not shown). In this embodiment, charging is continued until the SOC of the secondary battery 2 reaches 90%. Thereafter, in step S2, charging and discharging of the secondary battery 2 is suspended until the electric aerial vehicle 100 starts flying. After the secondary battery 2 is charged, the electric aerial vehicle 100 can immediately start flying without pausing.

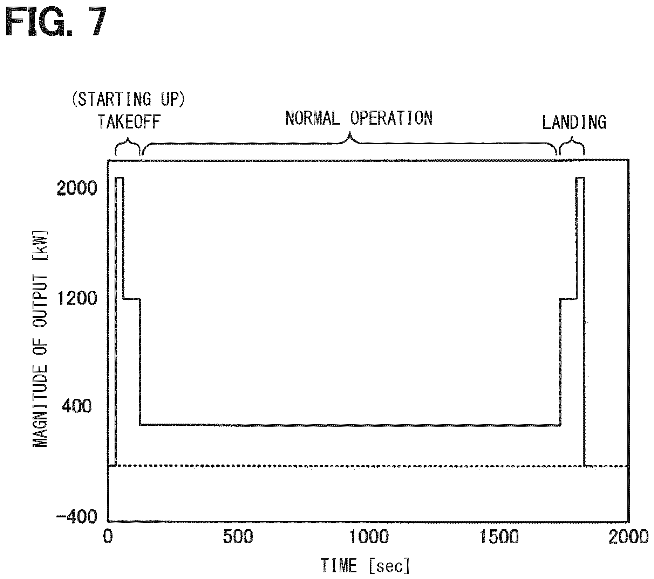

Next, in step S3, the electric aerial vehicle 100 is started, and high-rate discharge of the secondary battery 2 is commenced. When started, the electric aerial vehicle 100 of this embodiment takes off by driving the rotor 101, and reaches a point at a predetermined altitude. Therefore, as shown in FIG. 7, the electric aerial vehicle 100 requires a higher output when taking off at startup time, compared to during normal operation. Therefore, the secondary battery 2 is discharged at a high rate under the control of the battery control unit 3. The motor is driven at a high output, and the rotor 101 is rotated. In this embodiment, a high-rate discharge is performed at a discharge rate of, for example, 4 to 12 C (Capacity). In this embodiment, the high-rate discharge starts when the SOC of the secondary battery 2 is 80% or higher. In this embodiment, the normal operation means cruising of the electric aerial vehicle 100 from immediately after the electric aerial vehicle 100 takes off and reaches a point at a predetermined altitude (i.e., normal operation start point described below) until it reaches the sky above the destination. In other words, the normal operation is movement of the electric aerial vehicle 100 that does not include takeoff and landing. The takeoff and landing of the electric aerial vehicle 100 are mainly movements along the vertical direction.

Next, in step S4 of FIG. 6, high-rate discharging is performed to cause the secondary battery 2 to generate heat. In this heat generation step of S4, the temperature of the secondary battery 2 can be increased to, for example, 45°C or higher. Specifically, in the heat generation step of S4, high-rate discharge is performed in the high resistance region and the second high utilization region, thereby causing the secondary battery 2 to generate heat. In this heat generation step of S4, the second active material 42 is mainly utilized. In this embodiment, the heat generation step is performed in an SOC region where the SOC value of the secondary battery 2 is 70% or more.

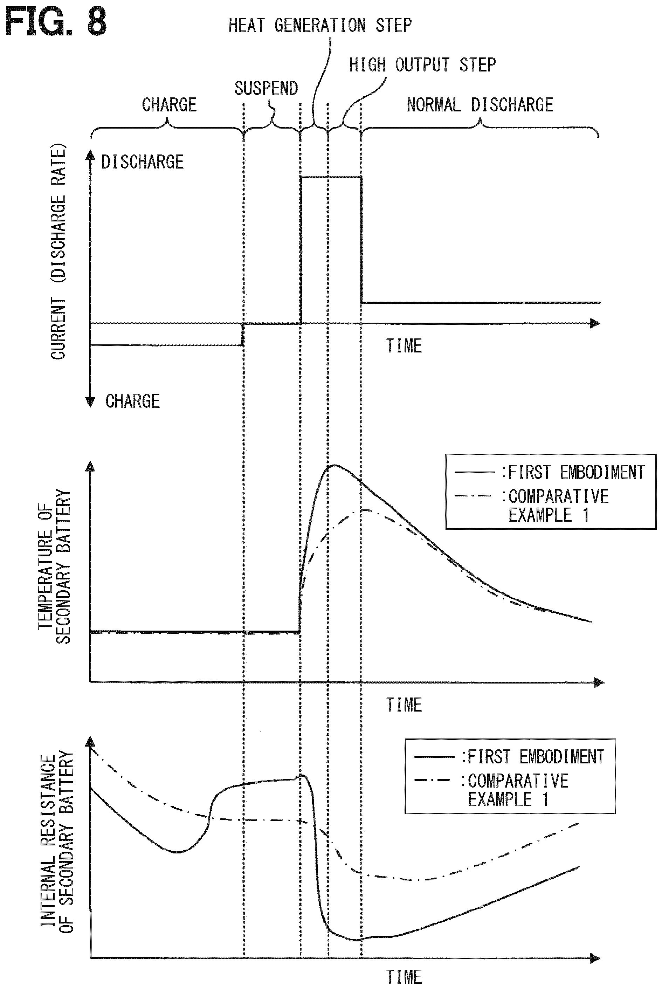

Furthermore, by carrying out the heat generation step of S4, as shown in FIG. 8, the internal resistance of the secondary battery 2 decreases as the temperature of the secondary battery 2 increases. Then, as shown in FIG. 6, in step S5 after the heat generation step, high-rate discharge is performed while the internal resistance of the secondary battery 2 is in a low state. This enables the secondary battery 2 to be discharged at a high output. Then, in the high output step of S5, the motor is driven by high-rate discharge of the secondary battery 2, and the electric aerial vehicle 100 is raised to a point at a predetermined altitude. In the high output step of S5, the secondary battery 2 outputs power in the first high utilization region in which the utilization rate of the first active material 41 is higher than the utilization rate of the second active material 42. In the high output step, the first active material 41 is mainly utilized. Furthermore, the high output step is performed in a region where the resistance of the first active material 41 is lower than the resistance of the second active material 42.

In steps S3 to S5, a continuous high output is required from the secondary battery 2 from the start of high-rate discharge until the electric aerial vehicle 100 reaches the normal operation start point. That is, during steps S3 to S5, the secondary battery 2 continuously performs the high-rate discharge. In this embodiment, the time for which the high-rate discharge is performed is shorter than the time for which discharge is performed during normal operation. In other words, during takeoff at startup, the period during which the secondary battery 2 continuously discharges at a high rate is shorter than the period during which normal operation is performed. In this embodiment, the normal operation start point indicates an altitude point at which the normal operation starts. The start-up time indicates a period from when the electric aerial vehicle 100, which is the electric vehicle 10, starts moving to when it starts the normal operation.

After the electric aerial vehicle 100 reaches the normal operation start point in step S5, the battery control unit 3 controls the discharge of the secondary battery 2 to cruise the electric aerial vehicle 100 in normal operation, in step S6, up to the destination point. Since normal cruising of the electric aerial vehicle 100 involves movement mainly along the horizontal direction, as shown in FIG. 7, the amount of power required is significantly smaller than the amount of power required for takeoff at the starting up. Furthermore, during normal operation, as shown in FIG. 8, the internal resistance of the secondary battery 2 also tends to be lower than in the heat generation step. Therefore, the temperature of the secondary battery 2 gradually decreases. In normal discharge, which is the discharge of the secondary battery 2 during normal operation, the discharge rate can be set to, for example, 0.3 to 1.0C.

In the flowchart of FIG. 6, steps after S6 are omitted. In step S6, after the electric aerial vehicle 100 is operated normally up to the sky above the destination, the electric aerial vehicle 100 is descended from a predetermined altitude to a landing point and landed. Landing requires more power than normal operation. Therefore, when the electric aerial vehicle 100 lands, the battery control unit 3 controls the secondary battery 2 to perform high-rate discharge.

Next, the effects of this embodiment will be described.

In the battery system 1, the secondary battery 2 is configured such that, when starting up and performing high-rate discharge, the utilization rate of the second active material 42 becomes higher than the utilization rate of the first active material 41, and then the utilization rate of the first active material 41 becomes higher than the utilization rate of the second active material 42. Therefore, at the start-up time, the temperature of the secondary battery 2 is increased, so that the secondary battery 2 can be discharged at a high rate in a state where the internal resistance of the secondary battery 2 is reduced. In other words, by suppressing the temporary deterioration of the secondary battery 2, high output of the secondary battery 2 can be ensured. As a result, the output at the start timing of the electric vehicle can be improved.

Generally, an electric aerial vehicle requires high power output in order to take off at the startup time. Therefore, when the electric aerial vehicle takes off, the secondary battery is discharged at a high rate. Here, let us assume that an electric aerial vehicle does not perform a heat generation step before a high output step. In this case, the lithium ion concentration distribution in the secondary battery may be biased due to the high-rate discharge during takeoff. If the concentration distribution of lithium ions becomes uneven, discharge may be restricted even if the SOC of the secondary battery is sufficiently high. Thus, temporary deterioration of the secondary battery may occur. In the battery system 1 of this embodiment, the heat generation step is controlled to be performed before the high output step. That is, at the start timing, a high resistance region and a second high utilization region are provided in the high-rate discharge region, thereby increasing the temperature of the secondary battery 2. This allows the lithium ions to move more easily in the secondary battery 2, making it difficult for the concentration distribution of the lithium ions to become biased. As a result, temporary deterioration of the secondary battery 2 can be suppressed, and the high output step can be performed in a state where the internal resistance of the secondary battery 2 is sufficiently low. Furthermore, in the high output step following the heat generation step, the utilization rate of the first active material 41 is higher than the utilization rate of the second active material 42. Furthermore, in the SOC region where the high output step is performed, the resistance of the first active material 41 tends to be lower than the resistance of the second active material 42. Therefore, a high output from the secondary battery 2 can be reliably ensured. As a result, the output performance can be improved throughout the entire period during which high-rate discharge is performed.

Next, the present embodiment and Comparative Example 1 will be described in comparison. In this embodiment, the secondary battery 2 contains both the first active material 41 and the second active material 42 in the active material layer 40 of the positive electrode 4. Therefore, as shown in FIG. 8, compared to Comparative Example 1 which contains only lithium nickel cobalt manganese oxide as the positive electrode active material, the internal resistance of the secondary battery 2 can be increased in the SOC region where the heat generation step is performed, due to the second active material 42 in this embodiment. Therefore, the temperature of the secondary battery 2 can be reliably increased, and the internal resistance of the secondary battery 2 can be reliably reduced in the SOC region where the high output step is performed after the heat generation step. That is, in this embodiment, the temperature of the secondary battery 2 can be increased at a timing when high output is required, and further, the utilization rate of the first active material 41 having low resistance can be increased. As a result, high output can be ensured while the internal resistance of the secondary battery 2 is significantly reduced.

Generally, when secondary batteries are used as a battery module, the electrolyte may be pushed out of the electrodes, depending on how the secondary batteries are restrained using a restraining member, thereby reducing the amount of electrolyte in the electrodes. In such a case, temporary deterioration of the secondary battery may easily occur due to the implementation of high-rate discharge. Furthermore, when so-called electrode swelling occurs due to a change in the volume of the active material, temporary deterioration of the secondary battery due to high-rate discharge may easily occur. In contrast to this, in the present embodiment, the high output step is performed after the heat generation step. Therefore, even if the electrolyte is pushed out of the electrodes due to constraints on the secondary battery 2 or the like, temporary deterioration of the secondary battery 2 can be easily suppressed. As a result, high output from the secondary battery 2 can be reliably ensured.

The resistance of the first active material 41 decreases as the SOC of the secondary battery 2 increases. Therefore, in the SOC region where the high output step is performed, the resistance of the first active material 41 tends to become smaller. Therefore, in the high output step in which the utilization rate of the first active material 41 is high, the high output of the secondary battery 2 can be further ensured.

The ratio of the first active material 41 to the total active material of the positive electrode 4 is 50 to 95 wt%, and the ratio of the second active material 42 to the total active material of the positive electrode 4 is 5 to 50 wt%. Therefore, it is possible to adjust the range of the SOC to be the second high utilization region by adjusting the content ratio of the first active material 41 and the second active material 42 in the positive electrode 4 within the above range. Therefore, the adjustment is possible such that an SOC required to perform the heat generation step can be the second high utilization region. As a result, the heat generation step can be performed for an appropriate period of time in accordance with any initial SOC value.

When the initial SOC value is relatively high, the ratio of the first active material 41 to the total active material of the positive electrode 4 is preferably 80 to 95 wt%, and the ratio of the second active material 42 to the total active material of the positive electrode 4 is preferably 5 to 20 wt%. In this case, the heat generation step and the high output step can be carried out efficiently. That is, when the initial SOC value is relatively high, if the ratio of the second active material 42 is higher than the above-described ratio, the heat generation step becomes too long, and the heat generation step and the high output step may not be performed efficiently. Furthermore, if the ratio of the second active material 42 to the total active material of the positive electrode 4 is lower than the above-described ratio, the heat generation step may not be performed sufficiently. Therefore, when the initial SOC value is relatively high, the ratio of the second active material 42 to the total active material of the positive electrode 4 is preferably 5 to 20 wt%. This allows the heat generation step and the high output step to be carried out efficiently. Furthermore, if the ratio of the first active material 41 is higher than the above-described ratio, when the initial SOC value is relatively high, the ratio of the second active material 42 may become too low, and the heat generation step may not be performed sufficiently. Furthermore, if the ratio of the first active material 41 is lower than the above-described ratio, when the initial SOC value is relatively high, the ratio of the second active material 42 may become too high. Therefore, when the initial SOC value is relatively high, the ratio of the first active material 41 to the total active material of the positive electrode 4 is preferably 80 to 95 wt%. In this case, the heat generation step and the high output step can be carried out efficiently. As a result, the output at the time of starting can be further improved.

When the initial SOC value is set relatively low, the ratio of the second active material 42 to the total active material of the positive electrode 4 is preferably 40 to 50 wt%, and the ratio of the first active material 41 to the total active material of the positive electrode 4 is preferably 50 to 60 wt%. In this case, when the initial SOC value is relatively low, the heat generation step and the high output step can be efficiently performed.

When the initial SOC value is relatively high, the ratio of the second active material 42 to the total active material of the positive electrode 4 is preferably 10 wt% or less. In this case, the heat generation step and the high output step can be performed reliably and efficiently. Furthermore, when the initial SOC value is relatively high, the ratio of the second active material 42 to the total active material of the positive electrode 4 is preferably 9 wt% or less. In this case, the heat generation step and the high output step can be carried out more reliably and efficiently.

The first active material 41 is a lithium nickel cobalt manganese oxide having a layered rock salt structure. The second active material 42 is lithium manganese iron phosphate having an olivine structure. Therefore, the heat generation step and the high output step can be performed reliably and efficiently. As a result, temporary deterioration of the secondary battery 2 can be reliably suppressed and high output can be reliably ensured. In addition, the second high utilization region is easily provided in both the high-rate discharge region at startup and the low SOC region. Furthermore, a high resistance region is likely to be formed in the high-rate discharge region at startup, and the second active material 42 is likely to have a region with a lower resistance than the first active material 41 in the low SOC region. Therefore, in the high-rate discharge region at startup, the heat generation step can be easily and reliably performed, and in the low SOC region, high output can be easily and reliably secured. As a result, high output from the secondary battery 2 can be reliably ensured both during takeoff and landing.

Furthermore, the lithium manganese iron phosphate as the second active material 42 is less susceptible to particle cracking and surface deterioration than the lithium nickel cobalt manganese oxide as the first active material 41. Therefore, the durability of the secondary battery 2 can be improved. As a result, the life of the secondary battery 2 can be extended.

In this embodiment, the average of diameters of particles of the first active material 41 is larger than the average of diameters of particles of the second active material 42. Therefore, deterioration of the first active material 41 can be reliably suppressed. That is, the first active material 41 reacts more easily with the electrolyte 20 on its surface than the second active material 42. This reaction may cause a coating on the surface of the first active material 41, which may cause deterioration of the first active material 41. Therefore, in this embodiment, the average particle diameter of the first active material 41 is made larger than the average particle diameter of the second active material 42. This allows the surface area of the entire first active material 41 contained in the positive electrode 4 to be reduced. In other words, the overall surface area of the first active material 41 that is in contact with the electrolyte 20 can be reduced. Therefore, the reaction between the first active material 41 and the electrolyte 20 can be suppressed, and deterioration of the first active material 41 can be reliably suppressed. As a result, the life of the secondary battery 2 can be extended.

The average particle diameter of the second active material 42 is smaller than the average particle diameter of the first active material 41. Therefore, particle cracking of the second active material 42 can be further suppressed. Thus, the life of the secondary battery 2 can be reliably extended, and temporary deterioration of the secondary battery 2 can be reliably suppressed. Furthermore, the smaller the average particle diameter of the second active material 42, the easier it is to reduce the resistance of the second active material 42 and to distribute the second active material 42 uniformly in the positive electrode 4, thereby making it easier to improve the safety of the secondary battery 2. However, when the particle diameter of the second active material 42 is reduced to the nano-size of less than 100 nm, the particles of the second active material 42 tend to agglomerate, making it difficult to uniformly mix the first active material 41 and the second active material 42. Therefore, the particle diameter of the second active material 42 is preferably 100 nm or more. This can improve the manufacturability.

In a low SOC region, the second active material 42 has a lower resistance than the first active material 41. Moreover, the secondary battery 2 is configured to have a second high utilization region in the low SOC region. Therefore, when the electric aerial vehicle 100 lands in the second high utilization region of the low SOC region, the high output of the secondary battery 2 can be further ensured. As a result, the output of the electric vehicle 10 at the start time can be further improved.

The electric aerial vehicle 100 is equipped with the battery system 1. Therefore, when starting up the electric aerial vehicle 100, temporary deterioration of the secondary battery 2 is suppressed, thereby ensuring high output.

The electric aerial vehicle 100 is equipped with the secondary battery. Therefore, when starting up the electric aerial vehicle 100, temporary deterioration of the secondary battery 2 is suppressed, thereby ensuring high output.

As described above, according to this embodiment, it is possible to provide the battery system 1, the secondary battery 2, and the electric aerial vehicle 100 that can improve the output of the electric vehicle 10 at the start-up time.

### (Experimental Example 1)

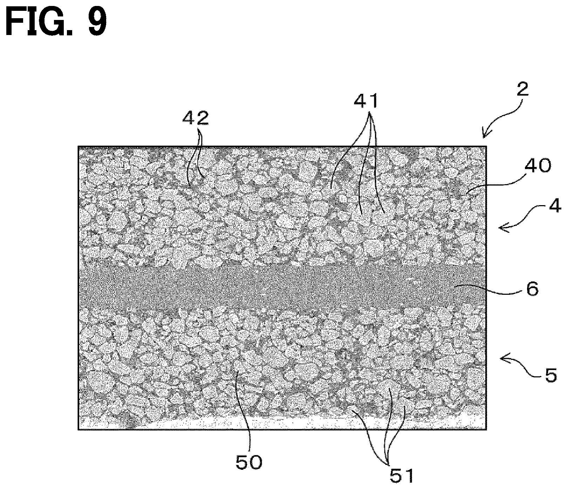

In this example, discharge tests and cycle tests are performed using plural secondary batteries having the same basic structure as in the first embodiment but different compositions of the positive electrode active material. As the positive electrode active material, LiNi_{0.8}Co_{0.1}Mn_{0.1}O₂ (hereinafter simply referred to as "NCM") and LiMn_{0.6}Fe_{0.4}PO₄ (hereinafter simply referred to as "LMFP") are used. As the negative electrode active material, graphite is used. The electrolyte is a solvent containing vinylene carbonate and LiPF₆ of 1M. Vinylene carbonate is added in an amount of 1% of the total electrolyte. The solvent of electrolyte is a mixture of ethylene carbonate, dimethyl carbonate, and ethyl methyl carbonate in a volume ratio of 1:1:1. FIG. 9 is a diagram of a cross-section of the secondary battery of Working Example 1 in Table 1 described later, observed with a scanning electron microscope.

The test conditions for the discharge test are set as an atmospheric temperature of 25°C, an SOC of the secondary battery at the start of discharge of 90%, a discharge rate of 10C, and a lower limit voltage of 2.8V. In the discharge test, the current flow time was examined, which is the time from the start of discharge to when the discharge voltage reaches the lower limit and the discharge of the secondary battery stops. The test conditions for the cycle test are set as an atmospheric temperature of 25°C, a voltage during charging and discharging of 2.8 to 4.2 V, and a discharge rate of 1C. In the cycle test, the capacity retention rate of the secondary battery after 300 repeated charge and discharge cycles is examined. The capacity retention rate is a ratio of the discharge capacity after the test, relative to the discharge capacity before the test.

In the discharge test of this example, a current flow time of 230 seconds or more is set as a standard for whether the secondary battery can improve output at the start-up of an electric aerial vehicle when used in the electric aerial vehicle. In the discharge test, a current flow time of 240 seconds or more is set as a standard for further improving the output at the start-up of the electric aerial vehicle. Therefore, from the above test results, the ratio of NCM and LMFP that meets the standard is determined. In Table 1 below, a current flow time of 230 seconds or more is indicated by "Good", a current flow time of 240 seconds or more is indicated by "Excellent", and a current flow time of less than 230 seconds is indicated by "Poor".

In the cycle test of this example, a capacity retention rate of 80% or more is set as a standard for sufficiently suppressing the deterioration of the secondary battery. Therefore, from the above test results, the ratio of NCM and LMFP that meets the standard is determined. In Table 1 below, a case where the capacity retention rate is 80% or more is indicated by "Good", and a case where the capacity retention rate is less than 80% is indicated by "Poor".

The results of the discharge test and the cycle test are shown in Table 1 below. The item "active material ratio" in Table 1 indicates a weight ratio of NCM or LMFP to the total active material of the positive electrode. The maximum temperature in Table 1 indicates a temperature at which the secondary battery reached its highest temperature during the discharge test.

**Table 1**

| | active material ratio | | discharge test | | | cycle test (after 300cyc) | |
|---|---|---|---|---|---|---|---|
| | LMFP | NCM | current flow time (sec) | | maximum temperature (°C) | capacity retention rate | |
| Working Example 1 | 5% | 95% | Good | 230 | 46 | Good | 83% |
| Working Example 2 | 9% | 91% | Excellent | 245 | 48 | Good | 86% |
| Working Example 3 | 20% | 80% | Good | 232 | 51 | Good | 88% |
| Comparative Example1 | 0% | 100% | Poor | 223 | 43 | Poor | 70% |
| Comparative Example2 | 100% | 0% | Poor | 160 | 56 | Good | 93% |

As shown in Table 1, in the discharge test, Comparative Example 1 and Comparative Example 2 did not satisfy the standard, whereas Working Examples 1 to 3 show a current flow time of 230 seconds or more, and therefore satisfied the above standard. In comparison with Comparative Example 1, Working Examples 1 to 3 have higher maximum temperatures. From this result, it is considered that, since Working Examples 1 to 3 contain LMFP as the positive electrode active material, the heat generation step was able to be carried out reliably when high-rate discharge was performed. Therefore, the internal resistance of the secondary battery can be reduced, and high-rate discharge can be efficiently carried out by utilizing the NCM. As a result, the current flow time could be made relatively long. Moreover, in Working Examples 1 to 3, the current flow time is longer than in Comparative Example 2. From this, it is considered that in Working Examples 1 to 3, by containing LMFP in a ratio of 20% or less relative to the total active material of the positive electrode, when the SOC value at the start of discharge is relatively high, the period during which the heat generation step is performed is restricted from becoming too long, and the secondary battery was able to discharge for a long period of time with the internal resistance sufficiently low. Moreover, in Working Examples 1 to 3, the positive electrode contains NCM having a high energy density. Therefore, the inclusion of NCM in Working Examples 1 to 3 also enabled the current flow time to be relatively long. In Working Example 2, the current flow time is 240 seconds or more, which is longer than the current flow time in Working Example 1 and Working Example 3. In Working Example 2, LMFP is contained in a ratio exceeding 5% and not more than 10% based on the total active material of the positive electrode. It is believed that this allowed the heat generation step to be carried out for a period during which it would be more efficient. In other words, the temperature of the secondary battery was raised sufficiently high by the heat generation step, while the period of the heat generation step was shortened, enabling discharging. As a result, it is believed that the high output of the secondary battery 2 can be maintained for a relatively long period of time, and the power supply time can be extended. In Comparative Example 1, although NCM having a high energy density is used as the positive electrode active material, LMPF is not contained. Therefore, the secondary battery was not able to generate sufficient heat, and the internal resistance of the secondary battery was not able to be reduced sufficiently. For this reason, it is believed that Comparative Example 1 was unable to satisfy the standard. In addition, Comparative Example 2 contains only LMPF as the positive electrode active material. Therefore, in Comparative Example 2, it is considered that the period during which the heat generation step was carried out was too long, and since NCM was not contained, the current flow time was shortened. As a result, it is believed that the standard could not be met.

As shown in Table 1, in the cycle test, the capacity retention rate was 80% or more in Working Examples 1 to 3 and Comparative Example 2, which satisfied the standard. The LMPF is less susceptible to particle cracking and surface deterioration caused by charge and discharge compared to the NCM. Therefore, it is considered that Working Examples 1 to 3 and Comparative Example 2, which contain LMPF as the positive electrode active material, had high capacity retention rate. In Comparative Example 1 in which LMPF was not contained as the positive electrode active material, the capacity retention rate was less than 80%, which did not satisfy the standard.

The present disclosure is not limited to the embodiments described above, and various modifications may be adopted within the scope of the present disclosure without departing from the spirit of the disclosure.

Although the present disclosure has been described in accordance with the embodiments, it is understood that the present disclosure is not limited to such embodiments or structures. The present disclosure includes various modifications and variations within the scope of equivalents. In addition, while various combinations and configurations, which are preferred, other combinations and configurations including further only a single element, more or less, are also within the spirit and scope of the present disclosure.

### <Others>

The features of the present disclosures are following.

### [Item 1]

A battery system (1) for an electric vehicle (10) includes:
a secondary battery (2); and
a battery control unit (3) configured to control a discharge of the secondary battery.

The battery control unit controls the secondary battery to perform a high-rate discharge at a start time of the electric vehicle, the high-rate discharge having a higher discharge rate than a discharge rate of the secondary battery during a normal operation of the electric vehicle.

A positive electrode (4) of the secondary battery has a first active material (41) and a second active material (42). In a high-rate discharge region which is an SOC region of the secondary battery in which the high-rate discharge is performed at the start time of the electric vehicle, the second active material has a high resistance region having a higher resistance than the first active material.

The secondary battery is configured such that a utilization rate of the first active material becomes higher than that of the second active material, after the utilization rate of the second active material becomes higher than the utilization rate of the first active material, when the high-rate discharge is performed at the start time.

### [Item 2]

In the battery system according to Item 1, the first active material has a smaller resistance as an SOC of the secondary battery increases.

### [Item 3]

In the battery system according to Item 1 or 2, a ratio of the first active material to a total active material of the positive electrode is 50 to 95 wt%, and a ratio of the second active material to the total active material of the positive electrode is 5 to 50 wt%.

### [Item 4]

In the battery system according to any one of Items 1 to 3, the first active material is a lithium nickel cobalt manganese oxide having a layered rock salt structure, and the second active material is a lithium manganese iron phosphate having an olivine structure.

### [Item 5]

A secondary battery (2) mounted on an electric aerial vehicle (100) includes: a positive electrode (4) and a negative electrode (5). The positive electrode has a first active material (41) and a second active material (42) having a higher resistance than the first active material when an SOC value of the secondary battery is a predetermined value. The first active material is a lithium nickel cobalt manganese oxide having a layered rock salt structure, and the second active material is a lithium manganese iron phosphate having an olivine structure.

### [Item 6]

The secondary battery according to Item 5 is configured to have a second high utilization region in which the utilization rate of the second active material is higher than the utilization rate of the first active material in a low SOC region where the SOC value of the secondary battery is lower than a predetermined value, and the second active material has a lower resistance than the first active material.

### [Item 7]

An electric aerial vehicle (100) includes the battery system according to any one of Items 1 to 4.

### [Item 8]

An electric aerial vehicle includes the secondary battery according to Item 5 or 6.

## Claims

1. A battery system (1) for an electric vehicle (10), the battery system comprising:
a secondary battery (2); and
a battery control unit (3) configured to control a discharge of the secondary battery, wherein
the battery control unit controls the secondary battery to perform a high-rate discharge, at a start time of the electric vehicle, to provide a higher discharge rate than a discharge rate of the secondary battery during a normal operation of the electric vehicle,
a positive electrode (4) of the secondary battery has a first active material (41) and a second active material (42), the second active material having a high resistance region where a resistance is higher than the first active material, in a high-rate discharge region which is an SOC region of the secondary battery in which the high-rate discharge is performed at the start time of the electric vehicle, and
the secondary battery is configured such that a utilization rate of the first active material becomes higher than that of the second active material, after the utilization rate of the second active material becomes higher than the utilization rate of the first active material, when the high-rate discharge is performed at the start time.

2. The battery system according to claim 1, wherein the first active material has a smaller resistance as an SOC of the secondary battery increases.

3. The battery system according to claim 1 or 2, wherein a ratio of the first active material to a total active material of the positive electrode is 50 to 95 wt%, and a ratio of the second active material to the total active material of the positive electrode is 5 to 50 wt%.

4. The battery system according to claim 1 or 2, wherein the first active material is a lithium nickel cobalt manganese oxide having a layered rock salt structure, and the second active material is a lithium manganese iron phosphate having an olivine structure.

5. A secondary battery (2) mounted on an electric aerial vehicle (100), the secondary battery comprising: a positive electrode (4) and a negative electrode (5), wherein
the positive electrode has a first active material (41) and a second active material (42) having a higher resistance than the first active material when an SOC value of the secondary battery is a predetermined value, and
the first active material is a lithium nickel cobalt manganese oxide having a layered rock salt structure, and the second active material is a lithium manganese iron phosphate having an olivine structure.

6. The secondary battery according to claim 5, wherein
in a low SOC region in which the SOC value of the secondary battery is lower than a predetermined value, the second active material has a lower resistance than the first active material, and
the secondary battery is configured to have a second high utilization region in which the utilization rate of the second active material is higher than the utilization rate of the first active material in the low SOC region.

7. An electric aerial vehicle (100) comprising the battery system according to claim 1 or 2.

8. An electric aerial vehicle comprising the secondary battery according to claim 5 or 6.
